# EUROPEAN PATENT SPECIFICATION

(11) **EP 3 869 050 B1**
(45) Date of publication and mention of the grant of the patent: **22.11.2023**
(21) Application number: 20158304.4
(22) Date of filing: 19.02.2020
(51) Int. Cl.: F16B 21/18, F16B 2/24, F16D 55/36

(54) **AN ARRANGEMENT FOR A SHIFTING BRAKE DEVICE**
ANORDNUNG FÜR EINE SCHALTBREMSVORRICHTUNG
AGENCEMENT POUR DISPOSITIF DE FREIN DE COMMUTATION

(43) Date of publication of application: 25.08.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: BUDACS, Henrique, 414 57 Göteborg (SE)
(74) Representative: Zacco Sweden AB

(56) References cited:
- WO-A1-2007/126146
- GB-A- 2 200 178
- US-A- 5 803 222
- US-A1- 2004 134 740

## Description

### TECHNICAL FIELD

The invention relates to an arrangement for a shifting brake device, which arrangement comprises a housing, a reaction plate and a snap ring for locking the reaction plate to the housing. In addition, the invention relates to a shifting brake device comprising such an arrangement.

### BACKGROUND

Transmissions can have a shifting brake, for braking or locking a component of a planetary gear set for instance. Such a shifting brake usually comprises a set of brake discs arranged in a housing, where a reaction plate is arranged at one end of the housing for limiting the axial movement of the brake discs. Further, a snap ring can be arranged for locking the reaction plate relative to the housing in the axial direction.

The housing has often internal axially extending splines for guiding the brake discs in an axial direction and rotationally lock the brake discs relative to the housing. Due to the splines arranged inside the housing, the material of the housing available for arranging the snap ring is limited.

The document WO2007/126146 describes a dual clutch for a vehicle transmission. The clutch has a reaction plate locked by a snap ring arranged on the inside of a housing. The reaction plate is arranged to limit the axial movement of coupling discs arranged on splines in the housing.

### SUMMARY

An objective of the invention is to provide an arrangement for a shifting brake device, which arrangement has an increased strength.

The objective is achieved by an arrangement according to claim 1.

The invention is based on the insight that by arranging the snap ring in a groove on the outside of the housing, the snap ring can be arranged to abut against the housing along a greater axial surface of the housing in comparison to a design where the snap ring is arranged on the inside of the housing. Hereby, the strength of the arrangement can be increased.

According to one embodiment, the projections are arranged at positions along the periphery of the reaction plate, and the recesses are arranged at corresponding positions along the circumference of the hollow cylinder portion, and preferably the snap ring is arranged to lock the reaction plate by retaining the projections of the reaction plate in the recesses of the housing. Hereby, a relatively large contact surface between the snap ring and the reaction plate as well as between the snap ring and the housing can be achieved.

The reaction plate can be circular and provided with splines arranged on an outer periphery, which splines are in engagement with the splines of the hollow cylinder portion.

According to a further embodiment, the recesses of the hollow cylinder portion are arranged on a main end surface of the hollow cylinder portion end. Hereby, the reaction plate can be mounted in a non-complicated way by relative axial movement of the reaction plate and the housing, thereby bringing the projections into the recesses.

According to a further embodiment, the depth of each recess extending in the axial direction from the main end surface to an axial bottom surface of the recess, exceeds the distance from the main end surface to an axial surface of the groove, which axial surface is faced to the end of the hollow cylinder portion, by a length which is at least equal to the thickness of the received projection of the reaction plate in the axial direction. Hereby, the snap ring can abut against the projections at the positions for the recesses and otherwise against the axial surface of the housing.

According to a further embodiment, the recesses of the hollow cylinder portion are arranged as radially extending through holes in the cylinder portion wall, which through holes are arranged at a distance from a main end surface of the hollow cylinder portion end, and preferably the reaction plate is connectable to the housing by the projections being resilient enabling the projections to spring away and back during assembling of the housing and the reaction plate to each other. Hereby, the strength can be improved due to the material of the housing which remains axially outside of the recesses.

According to a further embodiment, the reaction plate is ring-shaped. Hereby, a shaft extension can extend through the opening of the reaction plate.

According to a further embodiment, the arrangement comprises a further reaction plate, wherein the reaction plate and the further reaction plate abut to each other and the further reaction plate is arranged in the housing inside of the reaction plate. Hereby, the strength can be improved. For example, the outer reaction plate can be designed in a way contacting the inner reaction plate at a position corresponding to the radial position of brake discs arranged in the housing, for increasing the strength of the counter support at the position where the force from the brake discs is transferred to the inner reaction plate.

According to a further embodiment, the axial position of the projections of the reaction plate relative to the housing is the same as the axial position of the further reaction plate relative to the housing. Hereby, the length of the housing has not to be increased though two reaction plates are used.

The further reaction plate can be circular and provided with splines arranged on an outer periphery, which splines are in engagement with the splines of the hollow cylinder portion.

According to another aspect of the invention, the invention relates to a shifting brake device comprising an arrangement as described herein, wherein the shifting brake device further comprises one or more brake discs arranged in the housing, and the reaction plate is arranged to limit the movement of the brake discs in the axial direction.

The advantages of the shifting brake device are similar to the advantages already discussed hereinabove with reference to the arrangement.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a perspective view of a shifting brake device,
Fig. 2 is a partly cut view of the shifting brake device in Fig. 1,
Fig. 3a is an exploded view of some parts of the shifting brake device in Fig. 1,
Fig. 3b is a perspective view of the shifting brake device where only the components illustrated in Fig. 3 have been shown for illustration purposes,
Fig. 4 is an exploded view of a variant of the shifting brake device,
Fig. 5 is a partly cut view where the components illustrated in Fig. 4 are assembled,
Fig. 6 is an exploded view of a further variant of the shifting brake device, and
Fig. 7 is a partly cut view where the components illustrated in Fig. 6 are assembled.

### DETAILED DESCRIPTION OF EXAMPLE EMBODIMENTS

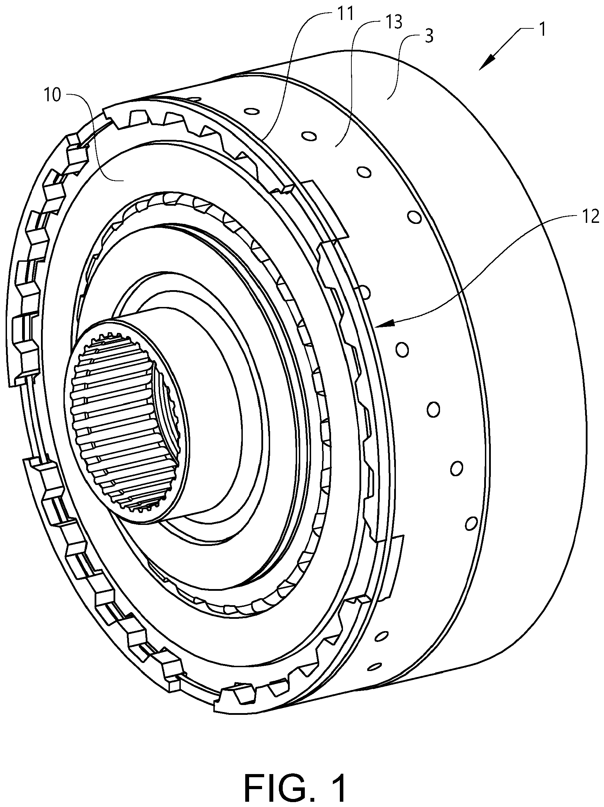

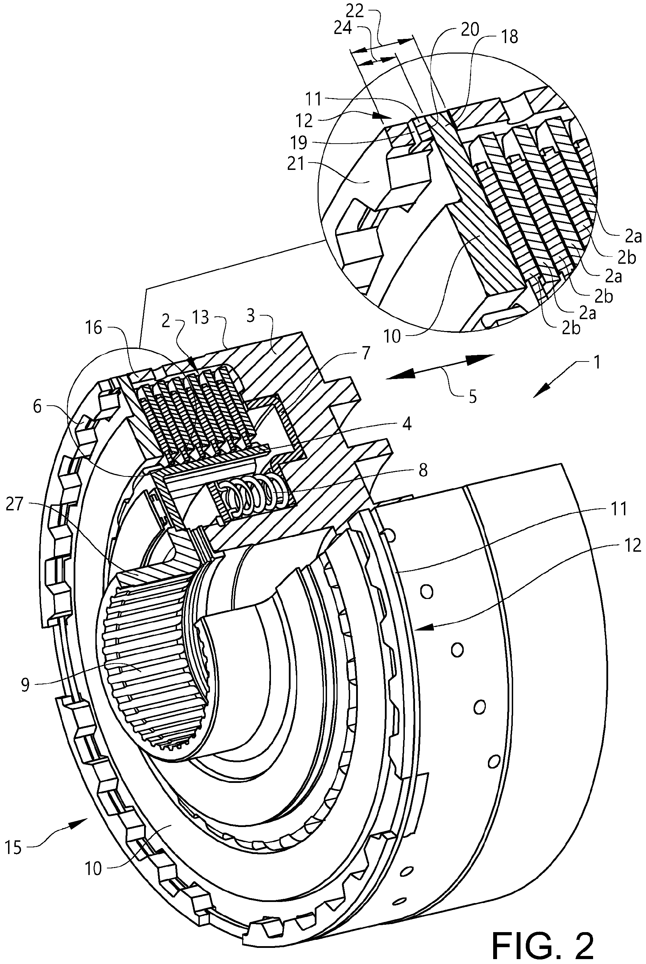

Fig. 1 is a perspective view of a shifting brake device 1 for a transmission. Such a shifting brake device 1 can be used for braking and locking a component of a planetary gear set. As further illustrated in Fig. 2 showing the shifting brake device 1 in a partly cut view, the shifting brake device 1 can comprises one or more brake discs 2 arranged in a housing 3.

A first set of brake discs 2a can be arranged rotationally locked to the housing 3 and a second set of brake discs 2b can be arranged rotationally locked to a holder 4 which holder 4 is journaled for rotation relative to the housing 3. The brake discs 2a, 2b are suitably arranged in a way overlapping each other when looked at in an axial direction 5, and alternating, one from the first set, one from the second set, one from the first set, etc. The brake discs 2 are arranged such that some movement in the axial direction 5 is allowed. In the embodiment illustrated in Fig. 2, the brake discs 2a of the first set of brake discs are connected to internal axially extending splines 6 of the housing 3 for enabling axial movement of the brake discs 2a relative to the housing 3 while being rotationally locked to the housing 3. The brake discs 2b of the second set of brake discs can be arranged correspondingly in the holder 4.

This means that the brake discs 2 can be pressed together in the axial direction 5 by hydraulics and a piston 7 for instance, for engagement of the brake discs 2. By engagement of the brake discs 2, the holder 4 is braked or locked against rotation relative to the housing 3. Further, a return spring 8 can be arranged to bring the piston 7 back when the hydraulic pressure is removed allowing the brake discs 2 to return back to a non-engagement state. The holder 4 can in turn be coupled to a shaft that is to be braked or locked against rotation. The holder 4 may have splines 9 for connection to such a shaft.

The shifting brake device 1 further comprises a reaction plate 10 or stop plate which is arranged to limit the movement of the brake discs 2 in the axial direction 5. When a pressure is applied to the brake discs 2, the reaction plate 10 constitutes a counter support preventing further movement in the axial direction 5 of the brake discs 2. In the embodiment illustrated in Fig. 2, the brake discs 2 are to be pressed together and against the reaction plate 10 by a force directed from right to left, whereas the return spring 8 is arranged to counteract such movement of the piston 7.

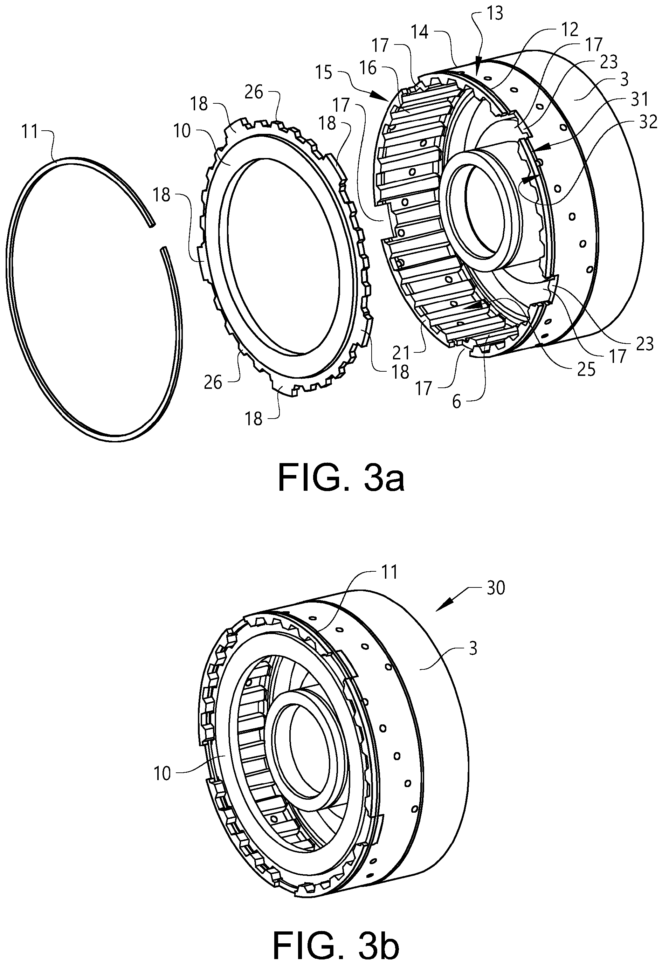

The arrangement 30 according to the invention comprises the housing 3, the reaction plate 10 and a snap ring 11. The housing 3 and the reaction plate 10 are mechanically connected to each other and the snap ring 11 is arranged in a groove 12 of the housing 3 for locking the reaction plate 10 to the housing 3 such that displacement of the reaction plate 10 relative to the housing 3 in an axial direction 5 is prevented. In the embodiment illustrated in Fig. 2, the reaction plate 10 is prevented from movement in the axial direction 5 from right to left by means of the snap ring 11. The reaction plate 10 can be for example a substantially flat disc. See also Figs. 3a and 3b.

The groove 12 is arranged on an outside surface 13 of the housing 3. By an outside surface 13 is meant a surface on the other side of a housing wall 16 relative to the intended position of the brake discs 2. Thus, the snap ring 11 is mounted from the outside and arranged in the groove 12 on the outside surface 13 of the housing 3.

Fig. 3a shows the housing 3, the reaction plate 10 and the snap ring 11 in an exploded view. The housing 3 has a hollow cylinder portion 14 and at an end 15 of the hollow cylinder portion 14, a wall 16 forming the hollow cylinder portion 14 has a plurality of recesses 17. The reaction plate 10 has a plurality of projections 18 which are received by the corresponding plurality of recesses 17 of the housing 3. The projections 18 are arranged at positions along the periphery of the reaction plate 10, and the recesses 17 are arranged at corresponding positions along the circumference of the hollow cylinder portion 14. The snap ring 11 is arranged to lock the reaction plate 10 by retaining the projections 18 of the reaction plate 10 in the recesses 17 of the housing 3. See Fig. 3b showing the components of Fig. 3a assembled. Remaining components (not shown) of the shifting brake device 1 and the arrangement 30 can be the same as described hereinabove. In addition, of course other components can also be included.

As also illustrated in Fig. 2, the snap ring 11 has a first outer axial surface 19 which abuts against a first side surface 31 of the groove 12 and a second inner axial surface 20 which abuts against a second side surface 32 of the groove 12, and against the projections 18 of the reaction plate 10 at the positions where the recesses 17 are arranged. See also Fig. 3a.

The recesses 17 of the hollow cylinder portion 14 are arranged on a main end surface 21 of the hollow cylinder portion end 15. In other words, the recesses 17 are open and accessible from the end 15 of the housing 3. When assembling the components to each other, the reaction plate 10 can be moved axially such that the projections 18 of the reaction plate 10 are positioned in the recesses 17 of the housing 3, and thereafter the snap ring 11 can be arranged in the groove 12 of the housing 3 for locking the reaction plate 10 relative to the housing 3.

The depth 22 of each recess 17 extending in the axial direction 5 from the main end surface 21 to an axial bottom surface 23 of the recess 17, suitably exceeds the distance 24 from the main end surface 21 to an axial surface 32 of the groove 12 (i.e. the second side surface of the groove 12 mentioned above), which axial surface 32 is faced to the end 15 of the hollow cylinder portion 14, by a length which is at least equal to the thickness of the received projection 18 of the reaction plate 10 in the axial direction 5.

The hollow cylinder portion 14 of the housing 3 has preferably a circular cross section. As mentioned hereinabove, on an inside surface 25 of the hollow cylinder portion 14, splines 6 can be arranged for the brake discs 2, which splines 6 extend in the axial direction 5 of the hollow cylinder portion 14, i.e. the longitudinal extension direction of the splines 6 is in the axial direction 5. The reaction plate 10 has suitably splines 26 arranged on an outer periphery corresponding to the splines 6 of the housing 3, for engagement with the splines 6 of the hollow cylinder portion 14. The reaction plate 10 is preferably ring-shaped for enabling a shaft extension 27 of the holder 4 to extend through the reaction plate 10, and suitably the reaction plate 10 is circular.

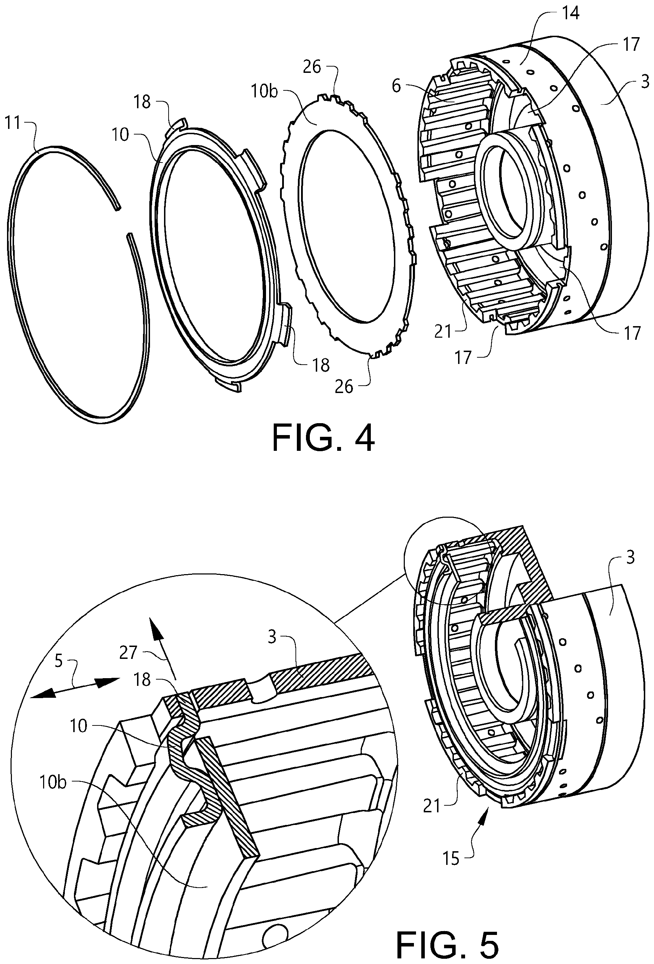

Figs. 4 and 5 show a variant of the arrangement comprising a further reaction plate 10b, where the reaction plate 10 and the further reaction plate 10b abut to each other and the further reaction plate 10b is arranged in the housing 3 inside of the reaction plate 10. Fig. 4 is an exploded view and Fig. 5 shows the components assembled together.

In this embodiment the reaction plate (hereinafter called the outer reaction plate) 10 is designed as a circular ring provided with the projections 18. The further reaction plate (hereinafter called the inner reaction plate) 10b is designed as a circular ring provided with splines 26 on the outer periphery, which splines 26 are in engagement with the splines 6 of the hollow cylinder portion 14. At the positions corresponding to the positions of the projections 18 of the outer reaction plate 10 and the recesses 17 of the housing 3, the inner reaction plate 10b has no splines.

The inner reaction plate 10b can be a flat disc, whereas the outer reaction plate 10 can be curved (see enlarged part of Fig. 5). The outer reaction plate 10 can be designed in a way contacting the inner reaction plate 10b at a position corresponding to the radial position of brake discs intended to be arranged in the housing 3, for increasing the strength of the counter support at the position where the force from the brake discs is transferred to the inner reaction plate 10b.

For example, the outer reaction plate 10 can act as a spring on the inner reaction plate 10b. At the same time, the projections 18 of the outer reaction plate 10 can be arranged such that the axial position of the projections 18 of the outer reaction plate 10 relative to the housing 3 is the same as the axial position of the inner reaction plate 10b relative to the housing 3. In other words, the projections 18 of the outer reaction plate 10 and the inner reaction plate 10b are preferably arranged in line with each other along a radial direction 27, though the remaining part of the outer reaction plate 10 is arranged axially displaced and arranged outside of the inner reaction plate 10b.

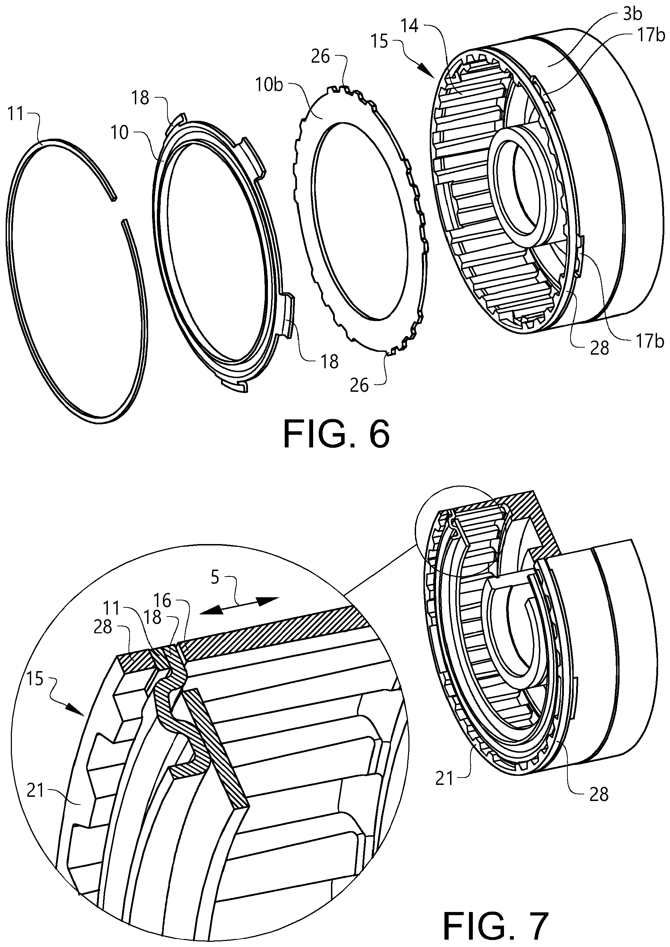

Figs. 6 and 7 show a further variant of the arrangement with a modified housing 3b. Fig. 6 is an exploded view and Fig. 7 shows the components assembled together.

The recesses 17b of the hollow cylinder portion 14 are arranged as radially extending through holes in the cylinder portion wall 16 of the housing 3b. The through holes 17b for receiving the projections 18 of the reaction plate 10 are arranged at a distance from the main end surface 21 of the hollow cylinder portion end 15, wherein material 28 of the housing 3b axially outside of the recesses 17b remains along the entire circumference, even at the positions for the recesses 17b.

In this embodiment, the outer reaction plate 10 is connectable to the housing 3b by the projections 18 of the outer reaction plate 10 being resilient enabling the projections 18 to spring away and back during assembling of the housing 3b and the outer reaction plate 10 to each other. For facilitating the assembling of the reaction plate 10, the through holes 17b have suitably a longer extent in the axial direction 5 than the thickness of the projections 18 of the reaction plate 10 in the axial direction 5. In the embodiment illustrated in Figs. 6 and 7, this overlength corresponds to the axial extension of the snap ring 11. Then, the snap ring 11 is arranged in the groove 12 between the housing 3b and the projections 18 locking the reaction plate 11 by fixation of the projections 18 in the axial direction 5.

It is to be understood that the present invention is not limited to the embodiments described above and illustrated in the drawings; rather, the skilled person will recognize that many changes and modifications may be made within the scope of the appended claims.

## Claims

1. An arrangement (30) for a shifting brake device (1), the arrangement comprising a housing (3), a reaction plate (10) and a snap ring (11), the housing and the reaction plate being mechanically connected to each other and the snap ring being arranged in a groove (12) of the housing (3) for locking the reaction plate (10) to the housing (3) such that displacement of the reaction plate relative to the housing in an axial direction (5) is prevented, the housing (3) having a hollow cylinder portion (14) and at an end (15) of the hollow cylinder portion (14), a wall (16) forming the hollow cylinder portion has a plurality of recesses (17) receiving a plurality of projections (18) of the reaction plate (10), the hollow cylinder portion (14) of the housing (3) having a circular cross section and on an inside surface (25) of the hollow cylinder portion (14) splines (6) being arranged, which splines extend in the axial direction (5) of the hollow cylinder portion (14), the arrangement comprising one or more brake discs (2) arranged in the housing, the brake discs being guided in the axial direction and rotationally locked relative to the housing by the splines, the reaction plate being arranged to limit the movement of the brake discs in the axial direction (5), **characterized in that** the groove (12) is arranged on an outside surface (13) of the housing (3).

2. An arrangement according to claim 1, **characterized in that** the projections (18) are arranged at positions along the periphery of the reaction plate (10), and the recesses (17) are arranged at corresponding positions along the circumference of the hollow cylinder portion (14).

3. An arrangement according to claim 1 or 2, **characterized in that** the snap ring (11) is arranged to lock the reaction plate (10) by retaining the projections (18) of the reaction plate (10) in the recesses (17) of the housing (3).

4. An arrangement according to any of claims 1-3, **characterized in that** the recesses (17) of the hollow cylinder portion (14) are arranged on a main end surface (21) of the hollow cylinder portion end (15).

5. An arrangement according to claim 4, **characterized in that** the depth (22) of each recess (17) extending in the axial direction (5) from the main end surface (21) to an axial bottom surface (23) of the recess (17), exceeds the distance (24) from the main end surface (21) to an axial surface (32) of the groove (12), which axial surface (32) is faced to the end (15) of the hollow cylinder portion (14), by a length which is at least equal to the thickness of the received projection (18) of the reaction plate (10) in the axial direction (5).

6. An arrangement according to any of claims 1-3, **characterized in that** the recesses (17b) of the hollow cylinder portion (14) are arranged as radially extending through holes in the cylinder portion wall (16), which through holes (17b) are arranged at a distance from a main end surface (21) of the hollow cylinder portion end (15).

7. An arrangement according to claim 6, **characterized in that** the reaction plate (10) is connectable to the housing (3b) by the projections (18) being resilient enabling the projections (18) to spring away and back during assembling of the housing (3b) and the reaction plate (10) to each other.

8. An arrangement according to any preceding claim, **characterized in that** the reaction plate (10) is circular and has splines (26) arranged on an outer periphery, which splines are in engagement with the splines (6) of the hollow cylinder portion (14).

9. An arrangement according to any preceding claim, **characterized in that** the reaction plate (10) is ring-shaped.

10. An arrangement according to any preceding claim, **characterized in that** the arrangement comprises a further reaction plate (10b), the reaction plate (10) and the further reaction plate (10b) abut to each other and the further reaction plate (10b) is arranged in the housing (3) inside of the reaction plate (10).

11. An arrangement according to claim 10, **characterized in that** the axial position of the projections (18) of the reaction plate (10) relative to the housing (3) is the same as the axial position of the further reaction plate (10b) relative to the housing (3).

12. An arrangement according to claim 10, **characterized in that** the further reaction plate (10b) is circular and has splines (26) arranged on an outer periphery, which splines are in engagement with the splines (6) of the hollow cylinder portion (14).

13. A shifting brake device (1) comprising an arrangement (30) according to any of claims 1-12.

## Patentansprüche

1. Anordnung (30) für eine Schaltbremsvorrichtung (1), wobei die Anordnung ein Gehäuse (3), eine Reaktionsplatte (10) und einen Sicherungsring (11) umfasst, wobei das Gehäuse und die Reaktionsplatte mechanisch miteinander verbunden sind und der Sicherungsring in einer Nut (12) des Gehäuses (3) zum Verriegeln der Reaktionsplatte (10) an dem Gehäuse (3) angeordnet ist, so dass eine Verschiebung der Reaktionsplatte relativ zu dem Gehäuse in einer axialen Richtung (5) verhindert wird, wobei das Gehäuse (3) einen Hohlzylinderabschnitt (14) aufweist und an einem Ende (15) des Hohlzylinderabschnitts (14) eine Wand (16), die den Hohlzylinderabschnitt ausbildet, eine Vielzahl von Vertiefungen (17) aufweist, die eine Vielzahl von Vorsprüngen (18) der Reaktionsplatte (10) aufnehmen, wobei der Hohlzylinderabschnitt (14) des Gehäuses (3) einen kreisförmigen Querschnitt aufweist und an einer inneren Oberfläche (25) des Hohlzylinderabschnitts (14) Keile (6) angeordnet sind, wobei sich die Keile in der axialen Richtung (5) des Hohlzylinderabschnitts (14) erstrecken, wobei die Anordnung eine oder mehrere Bremsscheiben (2) umfasst, die in dem Gehäuse angeordnet sind, wobei die Bremsscheiben in der axialen Richtung geführt werden und in der Rotation relativ zu dem Gehäuse durch die Keile verriegelt werden, wobei die Reaktionsplatte so angeordnet ist, dass sie die Bewegung der Bremsscheiben in der axialen Richtung (5) begrenzt, **dadurch gekennzeichnet, dass** die Nut (12) an einer äußeren Oberfläche (13) des Gehäuses (3) angeordnet ist.

2. Anordnung nach Anspruch 1, **dadurch gekennzeichnet, dass** die Vorsprünge (18) an Positionen entlang des Randes der Reaktionsplatte (10) angeordnet sind und die Vertiefungen (17) an entsprechenden Positionen entlang des Umfangs des Hohlzylinderabschnitts (14) angeordnet sind.

3. Anordnung nach Anspruch 1 oder 2, **dadurch gekennzeichnet, dass** der Sicherungsring (11) angeordnet ist, um die Reaktionsplatte (10) durch Halten der Vorsprünge (18) der Reaktionsplatte (10) in den Vertiefungen (17) des Gehäuses (3) zu verriegeln.

4. Anordnung nach einem der Ansprüche 1-3, **dadurch gekennzeichnet, dass** die Vertiefungen (17) des Hohlzylinderabschnitts (14) an einer Hauptendoberfläche (21) des Hohlzylinderabschnittendes (15) angeordnet sind.

5. Anordnung nach Anspruch 4, **dadurch gekennzeichnet, dass** die Tiefe (22) jeder Vertiefung (17), die sich in der axialen Richtung (5) von der Hauptendoberfläche (21) zu einer axialen Bodenoberfläche (23) der Vertiefung (17) erstreckt, den Abstand (24) von der Hauptendoberfläche (21) zu einer axialen Oberfläche (32) der Nut (12), wobei die axiale Oberfläche (32) dem Ende (15) des Hohlzylinderabschnitts (14) zugewandt ist, um eine Länge übersteigt, die mindestens gleich der Dicke des aufgenommenen Vorsprungs (18) der Reaktionsplatte (10) in der axialen Richtung (5) ist.

6. Anordnung nach einem der Ansprüche 1-3, **dadurch gekennzeichnet, dass** die Vertiefungen (17b) des Hohlzylinderabschnitts (14) als sich radial erstreckende Durchgangslöcher in der Zylinderabschnittswand (16) angeordnet sind, wobei die Durchgangslöcher (17b) in einem Abstand von einer Hauptendoberfläche (21) des Hohlzylinderabschnittsendes (15) angeordnet sind.

7. Anordnung nach Anspruch 6, **dadurch gekennzeichnet, dass** die Reaktionsplatte (10) mit dem Gehäuse (3b) durch die Vorsprünge (18) verbindbar ist, die elastisch sind, wodurch es den Vorsprüngen (18) ermöglicht ist, während des Montierens des Gehäuses (3b) und der Reaktionsplatte (10) aneinander vor- und zurückzufedern.

8. Anordnung nach einem der vorhergehenden Ansprüche, **dadurch gekennzeichnet, dass** die Reaktionsplatte (10) kreisförmig ist und Keile (26) aufweist, die an einem äußeren Rand angeordnet sind, wobei die Keile mit den Keilen (6) des Hohlzylinderabschnitts (14) in Eingriff stehen.

9. Anordnung nach einem der vorhergehenden Ansprüche, **dadurch gekennzeichnet, dass** die Reaktionsplatte (10) ringförmig ist.

10. Anordnung nach einem der vorhergehenden Ansprüche, **dadurch gekennzeichnet, dass** die Anordnung eine weitere Reaktionsplatte (10b) umfasst, wobei die Reaktionsplatte (10) und die weitere Reaktionsplatte (10b) aneinander anliegen und die weitere Reaktionsplatte (10b) in dem Gehäuse (3) innenseitig der Reaktionsplatte (10) angeordnet ist.

11. Anordnung nach Anspruch 10, **dadurch gekennzeichnet, dass** die axiale Position der Vorsprünge (18) der Reaktionsplatte (10) relativ zu dem Gehäuse (3) die gleiche ist wie die axiale Position der weiteren Reaktionsplatte (10b) relativ zu dem Gehäuse (3).

12. Anordnung nach Anspruch 10, **dadurch gekennzeichnet, dass** die weitere Reaktionsplatte (10b) kreisförmig ist und Keile (26) aufweist, die an einem äußeren Rand angeordnet sind, wobei die Keile mit den Keilen (6) des Hohlzylinderabschnitts (14) in Eingriff stehen.

13. Schaltbremsvorrichtung (1), umfassend eine Anordnung (30) nach einem der Ansprüche 1-12.

## Revendications

1. Agencement (30) pour un dispositif de frein de commutation (1), l'agencement comprenant un boîtier (3), un plateau de réaction (10) et un circlip (11), le boîtier et le plateau de réaction étant mécaniquement reliés l'un à l'autre et le circlip étant agencé dans une rainure (12) du boîtier (3) pour verrouiller le plateau de réaction (10) au boîtier (3) de telle sorte que le déplacement du plateau de réaction par rapport au boîtier dans une direction axiale (5) est évité, le boîtier (3) présentant une partie de cylindre creux (14) et à une extrémité (15) de la partie de cylindre creux (14), une paroi (16) formant la partie de cylindre creux présente une pluralité d'évidements (17) recevant une pluralité de saillies (18) du plateau de réaction (10), la partie de cylindre creux (14) du boîtier (3) présentant une section transversale circulaire et sur une surface intérieure (25) de la partie de cylindre creux (14) des cannelures (6) étant agencées, lesquelles cannelures s'étendent dans la direction axiale (5) de la partie de cylindre creux (14), l'agencement comprenant un ou plusieurs disques de frein (2) agencés dans le boîtier, les disques de frein étant guidés dans la direction axiale et verrouillés en rotation par rapport au boîtier par les cannelures, le plateau de réaction étant agencé pour limiter le mouvement des disques de frein dans la direction axiale (5), **caractérisé en ce que** la rainure (12) est agencée sur une surface extérieure (13) du boîtier (3).

2. Agencement selon la revendication 1, **caractérisé en ce que** les saillies (18) sont agencées dans des positions le long de la périphérie du plateau de réaction (10), et les évidements (17) sont agencés à des positions correspondantes le long de la circonférence de la partie de cylindre creux (14).

3. Agencement selon la revendication 1 ou 2, **caractérisé en ce que** le circlip (11) est agencé pour verrouiller le plateau de réaction (10) en retenant les saillies (18) du plateau de réaction (10) dans les évidements (17) du boîtier (3).

4. Agencement selon l'une quelconque des revendications 1 à 3, **caractérisé en ce que** les évidements (17) de la partie de cylindre creux (14) sont agencés sur une surface d'extrémité principale (21) de l'extrémité de partie de cylindre creux (15).

5. Agencement selon la revendication 4, **caractérisé en ce que** la profondeur (22) de chaque évidement (17) s'étendant dans la direction axiale (5) depuis la surface d'extrémité principale (21) jusqu'à une surface inférieure axiale (23) de l'évidement (17), dépasse la distance (24) depuis la surface d'extrémité principale (21) jusqu'à une surface axiale (32) de la rainure (12), laquelle surface axiale (32) fait face à l'extrémité (15) de la partie de cylindre creux (14), sur une longueur qui est d'au moins égale à l'épaisseur de la saillie (18) reçue du plateau de réaction (10) dans la direction axiale (5).

6. Agencement selon l'une quelconque des revendications 1 à 3, **caractérisé en ce que** les évidements (17b) de la partie de cylindre creux (14) sont agencés de manière à s'étendre radialement à travers des trous dans la paroi de la partie de cylindre (16), lesquels trous traversants (17b) sont agencés à une distance d'une surface d'extrémité principale (21) du extrémité de partie de cylindre creux (15).

7. Agencement selon la revendication 6, **caractérisé en ce que** le plateau de réaction (10) peut être relié au boîtier (3b) grâce aux saillies (18) qui sont élastiques, permettant aux saillies (18) de s'écarter et se rétracter lors de l'assemblage du boîtier (3b) et du plateau de réaction (10) l'un à l'autre.

8. Agencement selon l'une quelconque des revendications précédentes, **caractérisé en ce que** le plateau de réaction (10) est circulaire et présente des cannelures (26) agencées sur une périphérie externe, lesquelles cannelures sont en prise avec les cannelures (6) de la partie de cylindre creux (14).

9. Agencement selon l'une quelconque des revendications précédentes, **caractérisé en ce que** le plateau de réaction (10) est en forme d'anneau.

10. Agencement selon une quelconque revendications précédente, **caractérisé en ce que** l'agencement comprend un autre plateau de réaction (10b), le plateau de réaction (10) et l'autre plateau de réaction (10b) prennent appui l'un sur l'autre et l'autre plateau de réaction (10b) est agencé dans le boîtier (3) à l'intérieur du plateau de réaction (10).

11. Agencement selon la revendication 10, **caractérisé en ce que** la position axiale des saillies (18) du plateau de réaction (10) par rapport au boîtier (3) est la même que la position axiale de l'autre plateau de réaction (10b) par rapport au boîtier (3).

12. Agencement selon la revendication 10, **caractérisé en ce que** l'autre plateau de réaction (10b) est circulaire et présente des cannelures (26) agencées sur une périphérie externe, lesquelles cannelures sont en prise avec les cannelures (6) de la partie de cylindre creux (14).

13. Dispositif de frein de commutation (1) comprenant un agencement (30) selon l'une quelconque des revendications 1 à 12.
